# EUROPÄISCHE PATENTANMELDUNG

(11) **EP 0 599 003 A1**
(43) Veröffentlichungstag der Anmeldung: **01.06.1994**
(21) Anmeldenummer: 93114644.3
(22) Anmeldetag: 11.09.1993
(51) Int. Cl.: B01J 49/02, B01J 49/00, B01J 47/02

(54) **Vorrichtung und Verfahren zur Regeneration einer Ionenaustauscheranlage**

(30) Priorität: 26.11.1992 DE 9216084 U; 27.11.1992 DE 9216153 U; 13.02.1993 DE 4304411
(71) Anmelder: GÜTLING GMBH, D-70736 Fellbach (DE)
(72) Erfinder: Schwering, Hans-Ulrich, Dr., DE-7250 Leonberg (DE); Schaich, Roland, DE-7057 Leutenbach (DE)
(74) Vertreter: KOHLER SCHMID + PARTNER

(57) **Zusammenfassung**

Bei einer regenerierbaren Ionenaustauscheranlage mit einem Harzbehälter (2) münden die Rohrleitungen der Zuläufe von Wasser, Säure und/oder Lauge in eine gemeinsame Zulaufleitung (3) zur Pumpe, wobei jeder Zulauf durch ein ansteuerbares Absperrventil (14, 15, 16) gesondert von der Zulaufleitung (3) zur Pumpe abgekoppelt werden kann. Die Pumpe ist eine Druckluft-Membranpumpe (1), fördert direkt entweder in eine der in die Ober- oder Unterseite des Harzbehälters (2) mündenden Flüssigkeitsleitungen und weist eine Zähleinrichtung (8) zur Hubzählung auf, wobei eine mit der Zähleinrichtung (8) verbundene Steuereinrichtung (9) zur Steuerung der Volumenströme von Wasser aus dem Wasserzulauf und Säure oder Lauge aus dem Säure- oder Laugenzulauf über die ansteuerbaren Absperrventile (14, 15, 16) aufgrund der jeweiligen Hubzahl der Druckluft-Membranpumpe (1) vorgesehen ist. Dadurch kann eine genaue Zudosierung und Durchmischung der dem Harzbehälter (2) zugeführten Regeneriermittelflüssigkeit erreicht werden, und es sind keine besonderen Sicherungseinrichtungen für die Pumpe erforderlich.

## Beschreibung

Ionenaustauscheranlage mit einem Harzbehälter, der zumindest teilweise mit Ionenaustauscherharz in Form von kleinen Harzteilchen gefüllt ist und an seiner Oberseite und seiner Unterseite mindestens jeweils eine in eine Einlaß- bzw. Auslaßöffnung mündende Flüssigkeitsleitung für die Zuführung bzw. Ableitung von Flüssigkeiten in und aus dem Harzbehälter aufweist, mit einem Wasserzulauf und einem Säure- und/oder Laugenzulauf zum Harzbehälter, wobei die Zuläufe jeweils Rohrleitungen mit Absperrventilen aufweisen, sowie mit einer Pumpe zur Förderung der Flüssigkeiten.

Eine solche Ionenaustauscheranlage ist beispielsweise bekannt aus der US-A 5,108,616 bzw. DE-OS 38 21 036.

Bei den bekannten Ionenaustauscheranlagen wird in der Betriebsphase mit unerwünschten Ionen beladene Flüssigkeit, meistens Salz- oder kalkhaltiges Wasser, entweder im Aufstrom oder im Abstrom durch den Harzbehälter geleitet, wobei an der Oberfläche der Harzteilchen die in der Flüssigkeit gelösten unerwünschten Ionen gegen andere Ionen aus dem Ionenaustauscherharz ausgetauscht werden. Wenn die Mehrzahl der erwünschten Ionen an der Oberfläche der Harzteilchen gegen unerwünschte Ionen ausgetauscht sind, wird der Ionenaustauschprozeß uneffektiv, da ein merklicher Anteil der unerwünschten Ionen auch noch nach Durchlaufen der zu behandelnden Flüssigkeit durch den Harzbehälter in der Flüssigkeit gelöst bleibt. Daher muß nach einer gewissen Zeit bzw. nach Durchlaufen eines gewissen Volumens von zu behandelnder Flüssigkeit durch den Harzbehälter das nunmehr erschöpfte Ionenaustauscherharz regeneriert werden. Dies geschieht dadurch, daß eine Regeneriermittelflüssigkeit durch das Ionenaustauscherharz geleitet wird, die ihrerseits die an den Harzteilchen gebundenen unerwünschten Ionen gegen erwünschte Ionen austauscht. Im Falle eines Kationenaustauschers besteht die Regeneriermittelflüssigkeit in der Regel aus verdünnter Säure, bei einem Anionenaustauscher aus verdünnter Lauge; bei einem Selektivaustauscher wird das Ionenaustauscherharz zunächst mit verdünnter Säure regeneriert und anschließend mit verdünnter Lauge konditioniert.

Damit einerseits eine möglichst vollständige Regenerierung des erschöpften Ionenaustauscherharzes gewährleistet ist, andererseits aber die verwendete Regeneriermittelflüssigkeit nicht im Übermaß eingesetzt werden muß, wird bei bekannten Ionenaustauscheranlagen die Regeneriermittelflüssigkeit vor dem Einleiten in den Harzbehälter sowohl hinsichtlich ihres Verdünnungsgrades mit Wasser als auch hinsichtlich ihrer Volumenmenge mehr oder minder genau abgemessen. Hierfür sind mehrere unterschiedliche Verfahrensweisen und Vorrichtungen bekannt.

Bei der sogenannten Ansetzmethode wird in ein Vorlagegefäß eine genau definierte Volumenmenge an Wasser und eine ebenfalls genau definierte Volumenmenge an konzentrierter Säure oder Lauge Zugemessen. Anschließend wird die Flüssigkeit mittels einer Förderpumpe aus dem Vorlagegefäß herausgepumpt und über eine Rückführungsleitung demselben wieder zugeführt. Dieser Umpumpvorgang wird über eine gewisse Zeitdauer ausgeführt, wobei die konzentrierte Säure bzw. Lauge mit dem Wasser gut vermischt wird, so daß die im Vorlagegefäß angesetzte Regeneriermittellösung homogenisiert wird. Erst danach wird die so behandelte Regeneriermittellösung aus dem Vorlagegefäß in einer definierten Volumenmenge in den Harzbehälter eingeleitet. Anstelle der Umpumpvorrichtung kann auch ein Rührwerk zur Vermischung und Homogenisierung der Regeneriermittellösung vorgesehen sein. In jedem Falle ist die Ansetzmethode zwar besonders präzise hinsichtlich der dem Harzbehälter zugeführten Volumenmenge an Regeneriermittelflüssigkeit sowie deren Konsistenz, aber auch hinsichtlich der benötigten Vorrichtungen sehr aufwendig und im Verfahren zeitraubend, also insgesamt relativ teuer.

Bei einem anderen bekannten Verfahren, der sogenannten Dosiermethode, wird aus einem verhältnismäßig kleineren Vorlagegefäß zeit- oder füllstandsgesteuert eine bestimmte Volumenmenge an konzentrierter Säure oder Lauge mit Hilfe einer Dosierpumpe abgepumpt und einem Wasserstrom zugeführt, mit dem sich die Säure oder Lauge zur Regeneriermittelflüssigkeit verdünnt, welche in den Harzbehälter eingeleitet wird. Da bei der Dosiermethode die Umpumpeinrichtungen bzw. das Rührwerk wegfallen, ist die zugehörige Vorrichtung preisgünstiger als die zur Ansetzmethode gehörige Vorrichtung. Allerdings kann die dem Harzbehälter zugeführte Regeneriermittelflüssigkeit Homogenitätsschwankungen sowie, bedingt durch zeitliche Schwankungen des Wasserdruckes, Schwankungen in der zugeführten Volumenmenge aufweisen.

Ein weiterer Nachteil der bekannten Anlage ergibt sich aus der Notwendigkeit einer Installation von besonderen Sicherungseinrichtungen für die üblicherweise als Dosierpumpe verwendete mechanische Verdrängerpumpe. Da mit dieser Pumpe konzentrierte Säuren und Laugen gefördert werden, muß das System auf jeden Fall gegen ein Auslaufen von Flüssigkeiten im Störfall abgesichert werden. Beispielsweise bei Druckluftausfall, Leitungsverstopfung aufgrund von Verschmutzungen oder Fehlstellung von Ventilen im Leitungssystem muß die Förderpumpe gegen ein Heißlaufen und daraus sich ergebendes Undichtwerden oder gegen eine unzulässige Überdruckerzeugung, die zum Platzen der Leitungen führen könnte, abgesichert werden. Derartige Sicherungseinrichtungen bedeuten aber eine zusätzliche Investition, wobei aufgrund von möglichen Fehlern, die im Sicherungssystem auftreten können, eine absolute Absicherung der Anlage gar nicht möglich sein dürfte.

Preisgünstiger ist demgegenüber eine Vorrichtung, die nach der sogenannten Einsaug-Injektor-Methode arbeitet. Dabei wird zeit- oder füllstand-gesteuert konzentrierte Säure oder Lauge aus einem Vorlagegefäß einem nach Art einer Venturidüse aufgebauten Strahlsauger zugeführt, durch den Wasser mit einem bestimmten Leitungsdruck gepumpt wird. Da das Wasser aufgrund des im Strahlsauger erzeugten dynamischen Unterdruckes konzentrierte Säure oder Lauge mitreißt, kann bei der bekannten Vorrichtung eine Dosierpumpe zur Förderung der Säure oder Lauge entfallen. Daher ist die Vorrichtung noch preisgünstiger als die nach der oben beschriebenen Dosiermethode arbeitende Vorrichtung, jedoch unterliegt die so erzeugte Regeneriermittelflüssigkeit auch noch stärkeren, vom Wasserdruck abhängigen Volumen- und/oder Dichteschwankungen.

Aufgabe der vorliegenden Erfindung ist es daher, eine Vorrichtung und ein Verfahren zur Regeneration einer Ionenaustauscheranlage der eingangs genannten Art vorzustellen, bei der mit apparativ einfachen Mitteln dennoch eine möglichst genaue Zudosierung und Durchmischung der dem Harzbehälter zugeführten Regeneriermittelflüssigkeit gewährleistet ist und keine besonderen Sicherungseinrichtungen für die Förderpumpe erforderlich sind.

Erfindungsgemäß wird diese Aufgabe dadurch gelöst, daß die Rohrleitungen der Zuläufe von Frischwasser, Säure und/oder Lauge in eine gemeinsame Zulaufleitung zur Pumpe münden, wobei jeder Zulauf durch ein ansteuerbares Absperrventil gesondert von der Zulaufleitung zur Pumpe abgekoppelt werden kann, daß die Pumpe direkt entweder in eine der in die Ober- oder Unterseite des Harzbehälters mündenden Flüssigkeitsleitungen fördert, daß die Pumpe eine Druckluft-Membranpumpe ist und eine Zähleinrichtung zur Hubzählung aufweist, und daß eine mit der Zähleinrichtung verbundene Steuereinrichtung zur Steuerung der Volumenströme von Wasser aus dem Wasserzulauf und Säure oder Lauge aus dem Säure- oder Laugenzulauf über die ansteuerbaren Absperrventile aufgrund der jeweiligen Hubzahl der Druckluft-Membranpumpe vorgesehen ist.

Anstelle der oben beschriebenen, aus dem Stand der Technik bekannten Zumessungsmethoden kann die Dosierung der Regeneriermittelflüssigkeit bei der erfindungsgemäßen Ionenaustauscheranlage nunmehr aufgrund der Anzahl der Hübe der Druckluft-Membranpumpe erfolgen, die proportional zu einer gewissen geförderten Volumenmenge ist. Damit wird das Zumeßproblem auf ebenso überraschend elegante wie preisgünstige Weise gelöst wobei die Genauigkeit der Dosierung mit der bei oben beschriebenen Ansetzmethode konkurrieren kann. Da zur Förderung der Regeneriermittelflüssigkeit in allen bekannten Anlagen mindestens eine Pumpe eingesetzt werden muß, werden alle anderen oben beschriebenen zusätzlichen Maßnahmen und Vorrichtungsteile, die der Dosierung und der Vermischung der Regeneriermittellösung dienen, bei der erfindungsgemäßen Vorrichtung überflüssig. Mit Hilfe der Druckluft-Membranpumpe kann bei der erfindungsgemäßen Ionenaustauscheranlage zum Zwecke der Regenerierung des Ionenaustauscherharzes alternierend konzentrierte Säure oder Lauge und Wasser in den Harzbehälter gepumpt werden, wobei eine Vermischung der Säure oder Lauge mit dem Wasser bereits in der gemeinsamen Zulaufleitung zur Pumpe, in den in den Harzbehälter mündenden Flüssigkeitsleitungen sowie im Einlaßbereich der Flüssigkeitsleitungen in den Harzbehälter erfolgt.

Bei einem eventuellen Störfall während der Regenerierungsphase bleibt die erfindungsgemäße Ionenaustauscheranlage mit der Druckluft-Membranpumpe in einer für das System sicheren Betriebsstellung stehen, da die Druckluft-Membranpumpe im Gegensatz zu einer Verdrängerpumpe mit mechanischem Antrieb weder heißlaufen, noch einen unZulässigen Überdruck im Leitungssystem erzeugen kann, der zum Platzen von Leitungen führen könnte. In einem etwaigen Störfall bleibt die Druckluft-Membranpumpe ganz einfach stehen.

Bei einer besonders bevorzugten Ausführungsform der erfindungsgemäßen Ionenaustauscheranlage ist im Harzbehälter im Bereich der Unter- und/oder Oberseite zwischen der Einlaßöffnung der Flüssigkeitsleitungen zur Zuführung von Säure und/oder Lauge in den Harzbehälter und dem Ionenaustauscherharz eine Mischzone zur Vermischung und Homogenisierung der zugeführten Flüssigkeit vorgesehen. Damit kann sichergestellt werden, daß nur optimal homogenisierte Regeneriermittelflüssigkeit zum Ionenaustauscherharz gelangt, wodurch die Präzision des Regeneriervorganges nochmals entscheidend erhöht wird.

Bei einer bevorzugten Ausführungsform ist die erfindungsgemäße Ionenaustauscheranlage im Abstrom-Gegenstrom-Verfahren betreibbar. Bei einer anderen Ausführungsform kann die Ionenaustauscheranlage im Abstrom-Gleichstrom-Verfahren betrieben werden.

Bei einer speziellen Weiterbildung dieser beiden Ausführungsformen ist im Harzbehälter im Bereich der Oberseite ein Prallteller und im Bereich der Unterseite ein unterer Düsenboden vorgesehen, wobei das Ionenaustauscherharz im Volumenbereich zwischen dem Prallteller und dem unteren Düsenboden angeordnet ist und zwischen dem unteren Düsenboden und der Unterseite des Harzbehälters ein unteres Totvolumen bleibt. Der aus dem Stand der Technik an sich bekannte Prallteller vermindert den Übertrag von linearem Impuls des von oben während der Betriebsphase in den Harzbehälter eingeleiteten Flüssigkeitsstromes auf das Harzbett. Dadurch wird vermieden, daß die Harzteilchen von einem direkten Flüssigkeitsstrahl mit hohem Druck getroffen und zur Seite oder nach oben gewirbelt werden. Der untere Düsenboden verhindert ein Ausschwemmen des Ionenaustauscherharzes aus dem Harzbehälter. Bei einer nach dem Abstrom-Gegenstrom betreibbaren Ionenaustauscheranlage schließlich wird durch das Vorsehen eines unteren Totvolumens eine noch bessere Durchmischung der im Gegenstrom von unten nach oben in den Harzbehälter eingeleiteten Regeneriermittelflüssigkeit erreicht.

Bei einer weiteren, besonders bevorzugten Ausführungsform kann die im Abstrom-Gegenstrom betreibbare erfindungsgemäße Ionenaustauscheranlage dadurch verbessert werden, daß die Mischzone aus dem unteren Totvolumen, dem unteren Düsenboden sowie einer darauf angeordneten Lage von vorzugsweise grobkörnigem Filterkies, insbesondere mit einem Partikeldurchmesser zwischen 2 mm und 5 mm aufgebaut ist. Eine derartige Mischzone ist ohne großen finanziellen und apparativen Aufwand herstellbar und erfüllt optimal die Aufgaben eines Statikmischers.

Statt dessen kann bei einer einfachen Ausführungsform, insbesondere wenn der Harzbehälter ein Kunststofftank ist, die Mischzone aus einem im Bereich der Unterseite im Harzbehälter vorgesehenen Düsenstern sowie einer vom Boden des Harzbehälters bis zur Oberseite des Düsensterns angeordneten Schicht von vorzugsweise grobkörnigem Filterkies aufgebaut sein.

Bei einer weiteren Ausführungsform ist die Ionenaustauscheranlage im Aufstrom-Gegenstrom betreibbar. Eine solche erfindungsgemäße Ionenaustauscheranlage kann dahingehend ausgebildet sein, daß im Harzbehälter im Bereich der Oberseite ein oberer Düsenboden und im Bereich der Unterseite ein unterer Düsenboden vorgesehen ist, wobei das Ionenaustauscherharz im Volumenbereich zwischen dem unteren und dem oberen Düsenboden angeordnet ist und zwischen dem oberen Düsenboden und der Oberseite des Harzbehälters ein oberes Totvolumen und zwischen dem unteren Düsenboden und der Unterseite des Harzbehälters ein unteres Totvolumen bleibt. Aufgrund des unteren Totvolumens wirkt der untere Düsenboden bei der im Abstrom-Gegenstrom betriebenen Variante als Prallschutz und verhindert eine Durchwirbelung des Harzbettes beim Einleiten der zu behandelnden Flüssigkeit von unten in den Harzbehälter. Der obere Düsenboden wirkt dann bei der im Gegenstrom von oben nach unten erfolgenden Regenerierung zusammen mit dem oberen Totvolumen, wie oben beschrieben, als Mischzone für die Homogenisierung der Regeneriermittelflüssigkeit.

Bei einer besonders bevorzugten Weiterbildung ist die Mischzone aus dem oberen Düsenboden sowie einer zwischen dem oberen Düsenboden und dem Ionenaustauscherharz angeordneten Deckschicht aus Inertmaterial in Form von kleinen Partikeln mit einem geringeren spezifischen Gewicht als dem der Harzteilchen, insbesondere auch als dem von Wasser aufgebaut. Bei der im Aufstrom-Gegenstrom-Verfahren von oben nach unten erfolgenden Regenerierung schwimmen die leichten Deckschichtpartikel auf der im Harzbehälter befindlichen, meist wasserhaltigen Flüssigkeit und werden durch die aus dem oberen Düsenboden nach unten dringenden Regeneriermittelflüssigkeit in Rotation versetzt und verwirbelt, so daß sie eine sehr effektive Durchmischung und Homogenisierung der Regeneriermittelflüssigkeit bewirken.

Bei einer Ausführungsform der erfindungsgemäßen Ionenaustauscheranlage sind mindestens zwei Druckluftleitungen mit Luft von unterschiedlichem Druck vorgesehen, wobei die Druckluft-Membranpumpe alternativ mit Druckluft aus einer der Druckluftleitungen betrieben werden kann. Damit eröffnet sich die Möglichkeit, auf einfache und billige Weise die Förderpumpe mit unterschiedlichen Geschwindigkeiten zu betreiben, was an verschiedenen Stellen im Betriebszyklus der Anlage von Vorteil sein kann. Zwar läßt sich auch eine herkömmliche mechanische Verdrängerpumpe mit unterschiedlichen Geschwindigkeiten betreiben, jedoch ist dazu in der Regel ein wesentlich höherer Aufwand im elektrischen oder elektromechanischen Steuersystem der Pumpe erforderlich.

Bei einer vorteilhaften Weiterbildung dieser Ausführungsform ist in jeder der Druckluftleitungen ein Druckluftventil vorgesehen, und die Druckluftleitungen münden nach den Druckluftventilen und vor der Druckluft-Membranpumpe in eine gemeinsame Luftzufuhrleitung zur Druckluft-Membranpumpe. Damit ergibt sich eine einfache Möglichkeit der Umschaltung der Druckluftzuführung der Pumpe von einer Druckluftleitung auf eine andere.

Dieser Vorteil wird bei einer besonders bevorzugten Weiterbildung dadurch ausgenutzt, daß die Druckluftventile von der Steuereinrichtung aufgrund der aktuellen Hubzahl der Druckluft-Membranpumpe ansteuerbar sind. Auf diese Weise kann die Umschaltung der Hubgeschwindigkeit der Druckluft-Membranpumpe automatisch erfolgen.

Bei einer weiteren bevorzugten Ausführungsform umfaßt die Zähleinrichtung zur Hubzählung ein vorzugsweise elektronisches Zählwerk mit mindestens vier, vorzugsweise mindestens acht abspeicherbaren, diskreten Hubwerten.

In den Rahmen der Erfindung fällt auch ein Verfahren zum Betrieb einer Ionenaustauscheranlage der oben beschriebenen Art, bei dem zum Regenerieren des Ionenaustauscherharzes mehrfach alternierend Wasser und konzentrierte Säure oder Lauge in den Harzbehälter gefördert wird, wobei die Volumina der zugeführten Flüssigkeiten über die Hubzahl der Druckluft-Membranpumpe dosiert werden und wobei eine Verdünnung der zugeführten Säure oder Lauge auf eine Anwendungskonzentration zum Regenerieren erst im Harzbehälter durch Vermischung mit dem alternierend zugeführten Wasser erfolgt.

Besonders vorteilhaft ist eine Variante dieses Verfahrens zum Betrieb einer erfindungsgemäßen Ionenaustauscheranlage mit Mischzone, bei der die Vermischung von Säure oder Lauge mit Wasser im wesentlichen in der Mischzone stattfindet, bevor die aus Säure oder Lauge und Wasser gebildete Regenerierflüssigkeit das Ionenaustauscherharz erreicht. Auf diese Weise wird eine besonders gute Homogenisierung der Regenerierflüssigkeit und damit ein besonders gleichmäßiger und definierter Regeneriervorgang erzielt.

Während der Vermischung von Wasser mit konzentrierter Säure oder Lauge (beispielsweise Schwefelsäure oder Natronlauge) kann sich die Regeneriermittelflüssigkeit relativ stark erhitzen. Die frei werdende Mischwärme darf aber nur über die Behälterwand des Harzbehälters abgeführt werden, weil sonst die Gefahr einer thermischen Zerstörung des Ionenaustauscherharzes besteht. Bei einer besonders bevorzugten Verfahrensvariante erfolgt daher die mehrfach alternierende Zufuhr von Wasser und Säure oder Lauge in den Harzbehälter in schnellem zeitlichen Wechsel, vorzugsweise in kurzen Zeitintervallen von weniger als einigen Sekunden Dauer. Dadurch werden die Teilflüssigkeiten der Regenerierungsflüssigkeit bereits im unteren oder oberen Totvolumen der Kolonne vermischt und eine Abgabe der Mischungswärme an die Behälterwand gewährleistet. Bei entsprechender Wasserzufuhr wird das Gemisch zunehmend abgekühlt, bevor es dann schließlich bei unkritischen Temperaturen das Harzbett erreicht.

Bei einer weiteren Verfahrensvariante werden die zugeführten Flüssigkeiten mit unterschiedlichen Geschwindigkeiten aufgrund von unterschiedlichen Hubzahlen pro Zeiteinheit der Druckluft-Membranpumpe gefördert, insbesondere die konzentrierte Säure oder Lauge mit geringerer, das Wasser hingegen mit höherer Geschwindigkeit. Dadurch kann die Genauigkeit der volumenmäßigen Zumessung und insbesondere auch der Zusammensetzung der Regeneriermittelflüssigkelt erhöht werden. Eine weiten Möglichkeit besteht darin, den Regenerierschritt mit geringer und einen eventuellen nachfolgenden Spülschritt mit höherer Geschwindigkeit zu führen.

Die erfindungsgemäße Ionenaustauscheranlage kann im Abstrom-Gleichstrom-Verfahren betrieben werden, wobei sowohl die zu behandelnde Flüssigkeit als auch Regeneriermittelflüssigkeit den Harzbehälter von oben nach unten durchströmen. Ein Vorteil dieser Verfahrenweise besteht darin, daß das Harzbett vor dem Regenerierungsvorgang mit frischem Wasser rückspülbar ist, wodurch ein Austragen und eine Entfernung kleiner Fremdpartikel, beispielsweise Hydrolyseprodukte wie Metallhydroxid oder Harzabrieb bewirkt werden kann. Dabei geht allerdings die Schichtung des Harzbettes verloren, was anschließend einen hohen Regeneriermittelaufwand verlangt.

Die erfindungsgemäße Ionenaustauscheranlage kann auch im Aufstrom-Gegenstrom-Verfahren betrieben werden. Eine Rückspülung entgegen der Regenerierrichtung ist bei diesem Verfahren jedoch nicht möglich, da das Harzbett sowohl oben wie unten durch einen für Schmutzpartikel undurchlässigen Düsenboden begrenzt ist.

Bei einer bevorzugten Verfahrensvariante wird die erfindungsgemäße Ionenaustauscheranlage im Abstrom-Gegenstrom-Verfahren betrieben. Dabei ist es möglich, daß nach einer Regenerierung des Ionenaustauscherharzes und vor dem Beschicken des Harzbehälters mit Flüssigkeit, deren Ionen im Harz ausgetauscht werden sollen, eine Rückspülung des Harzbehälters mit frischem Wasser im Aufstrom, vorzugsweise mit hoher Strömungsgeschwindigkeit, insbesondere > 20 m/h, erfolgt. Durch die hohe Strömungsgeschwindigkeit des Rückspülwasser können kleinere Partikel aus dem Ionenaustauscherharz entfernt werden. Allerdings geht auch bei dieser Betriebsweise die Schichtung des Harzbettes verloren.

Besonders vorteilhaft ist es, wenn die Regenerierung des Ionenaustauscherharzes im Abstrom-Gegenstrom-Verfahren mit geringer Strömungsgeschwindigkeit, insbesondere < 5 m/h erfolgt. Dadurch kann das Harzbett ohne Umschichtung aufgelockert und dabei kleinere Schmutzpartikel aus dem Harzbehälter entfernt werden. Besonders hilfreich ist hierfür der pulsierende Förderstrom der erfindungsgemäß verwendeten Druckluft-Membranpumpe.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebigen Kombinationen Anwendung finden. Es zeigen:
- Fig. 1: ein Funktionsschema der erfindungsgemäßen Ionenaustauscheranlage; und
- Fig. 2: schematische Querschnitte durch den Harzbehälter einer erfindungsgemäßen Ionenaustauscheranlage im
a) Abstrom-Gleichstrom-Betrieb,
b) Aufstrom-Gegenstrom-Betrieb,
c) Abstrom-Gegenstrom-Betrieb.

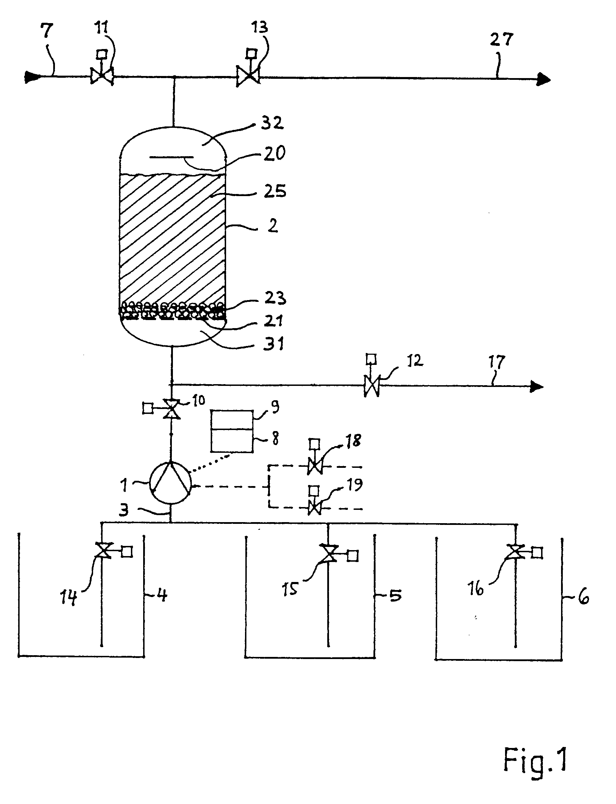

Die in Fig. 1 gezeigte Ionenaustauscheranlage besteht im Kernstück aus einem Harzbehälter 2 mit einem unteren Totvolumen 31, einem unteren Düsenboden 21, einer darauf angeordneten Schicht von grobkörnigem Filterkies 23, einer über dem Filterkies 23 aufgeschütteten Füllung von Ionenaustauscherharz 25 in Form von kleinen Harztteilchen sowie einem darüber befindlichen oberen Totvolumen 32 mit einem Prallteller 20.

Im Betrieb wird Flüssigkeit mit gelösten Ionen, in der Regel salz- oder kalkhaltiges Wasser, deren unerwünschte Ionen gegen andere Ionen ausgetauscht werden sollen, über einen Zulauf 7 bei geöffneten Ventilen 11 und 12 und geschlossenen Ventilen 10 und 13 bis 16 über eine Flüssigkeitsleitung, die an der Oberseite des Harzbehälters 2 in eine Einlaßöffnung mündet, in den Harzbehälter 2 eingeleitet und durch eine Auslaßöffnung an der Unterseite des Harzbehälters 2 in einen Produkt-Ablauf 17 abgeleitet. Die Absperrventile 10 bis 16 sind jeweils elektrisch ansteuerbar und können gesondert betätigt werden. Zweckmäßigerweise erfolgt die Ansteuerung der Absperrventile 10 bis 16 über eine in Fig. 1 schematisch gezeigte Steuereinrichtung 9, was der Übersichtlichkeithalber jedoch nicht zeichnerisch dargestellt ist.

In einem ersten Betriebsschritt wird der Harzbehälter 2 im Abstrom von oben nach unten mit der zu behandelnden Flüssigkeit beschickt. Um das Harzbett beim Einleiten der Flüssigkeit möglichst nicht zu verwirbeln ist ein Prallteller 20 nach der Einlaßöffnung im oberen Totvolumen 32 an der Oberseite des Harzbehälters 2 vorgesehen. Beim Durchströmen des Ionenaustauscherharzes 25 werden die in der Flüssigkeit gelösten unerwünschten Ionen an der Oberfläche der Harzteilchen gegen andere Ionen ausgetauscht, beispielsweise Kalziumionen in zu enthärtendem Wasser gegen Natriumionen.

Nach Durchfluß einer gewissen Volumenmenge von zu behandelnder Flüssigkeit durch den Harzbehälter 2 hat sich an den Harzteilchen eine größere Menge der unerwünschten Ionen angesammelt, während die erwünschten Ionen im Austausch dafür an die zu behandelnde Flüssigkeit abgegeben wurden. Das Ionenaustauscherharz 25 ist dann erschöpft und ein weiterer effektiver Ionenaustausch bei der zu behandelnden Flüssigkeit kann nicht mehr gewährleistet werden. Im Falle von kalkhaltigem Wasser würde dies zu einem unkontrollierten Härtedurchbruch bei dem aus der Auslaßleitung 17 strömenden Produkt-Wasser führen.

Im nächsten Betriebsschritt wird daher eine Regenerierung des erschöpften Ionenaustauscherharzes 25 eingeleitet. Im gezeigten Beispiel erfolgt die Regenerierung im Gegenstrom von unten nach oben durch den Harzbehälter 2. Dazu werden die Absperrventile 11 bis 13 geschlossen und das Absperrventil 10 geöffnet, damit von einer Druckluft-Membranpumpe 1 Regeneriermittelflüssigkeit von unten in den Harzbehälter 2 gepumpt werden kann.

An die Druckluft-Membranpumpe 1 ist eine Zähleinrichtung 8 zur Zählung der Hübe der Druckluft-Membranpumpe 1 angeschlossen, die ein der Anzahl der Hübe entsprechendes Signal an die Steuereinrichtung 9 zur Steuerung der durch die Druckluft-Membranpumpe 1 in der Ionenaustauscheranlage geförderten Volumenströme weitergibt. Die Zähleinrichtung 8 kann ein elektronisches Zählwerk mit mehreren, im gezeigten Beispiel mindestens jedoch 4 abspeicherbaren diskreten Hubwerten umfassen. Im Programmablauf während des Betriebs der Ionenaustauscheranlage zählt dann die Zähleinrichtung 8 jeweils die Hübe der Druckluft-Membranpumpe 1 bis zu einem der vorgegebenen Hubwerte, gibt dann ein Steuersignal an die Steuereinrichtung 9 ab, die daraufhin durch Umschalten von einigen der Absperrventile 10 bis 16 den nächsten Betriebsschritt einleitet. Die Zähleinrichtung 8 setzt sich dann selbständig auf Null zurück und zählt bis zum nächsten diskret abgespeicherten Hubwert hoch, woraufhin sie wiederum ein Steuersignal an die Steureinrichtung 9 zur Einleitung des folgenden Betriebsschrittes abgibt.

Die Druckluft-Membranpumpe 1 kann mit Druckluft von unterschiedlichem Druck schneller bzw. langsamer, d.h. mit größerer bzw. geringerer Hubzahl pro Zeiteinheit betrieben werden. Im gezeigten Beispiel sind zwei Druckluftleitungen vorgesehen, die jeweils mit einem der Druckluftventile 18 bzw. 19 geöffnet oder geschlossen werden können, und die nach den Druckluftventilen 18, 19 und vor der Druckluft-Membranpumpe 1 in eine gemeinsame Luftzufuhrleitung zur Druckluft-Membranpumpe 1 münden. Wird nun der Druckluft-Membranpumpe 1 Luft mit höherem Druck zugeführt, so läuft die Pumpe schneller als bei Zufuhr von Luft mit geringerem Druck. Auf diese Weise kann die Hochgeschwindigkeit der Druckluft-Membranpumpe 1 gesteuert werden.

Die Geschwindigkeitsumschaltung der Druckluft-Membranpumpe 1 je nach Betriebsschritt kann automatisch mit Hilfe der Steuereinrichtung 9 aufgrund der aktuellen, von der Zähleinrichtung 8 an die Steuereinrichtung 9 weitergegebenen Hubzahl erfolgen, wenn die Druckluftventile 18, 19 ansteuerbar und mit der Steuereinrichtung 9 entsprechend verbunden sind.

Die Regeneriermittelflüssigkeit wird im zweiten Betriebsschritt im Gegensatz zu bekannten Verfahren nicht in einem Vorlagegefäß bereitgestellt, sondern erst im unteren Bereich des Harzbehälters 2 gemischt. Dazu wird zunächst bei kurzzeitig geöffnetem Absperrventil 14 aus einem Wasserbehälter 4 über wenige Hübe eine gewisse Menge Wasser in das untere Totvolumen 31 gepumpt. Über die Steuereinrichtung 9 wird das Absperrventil 14 geschlossen und das Absperrventil 15 geöffnet, so daß aus einem Säurebehälter 5 konzentrierte Säure in das Totvolumen 31 gefördert wird. Daraufhin wird wieder auf Förderung von Wasser umgeschaltet und der alternierende Förderungsvorgang von Wasser und Säure mehrfach wiederholt, bis eine vorher bestimmte Menge an Regeneriermittelflüssigkeit in den Harzbehälter 2 eingeleitet ist. Die Konzentration des Flüssigkeitsgemisches bestimmt sich dabei aus den jeweiligen Hubzahlen der Druckluft-Membranpumpe 1 während der Förderungen der jeweiligen Einzelflüssigkeit.

Das untere Totvolumen 31, der untere Düsenboden 21 und die Lage von grobkörnigem Filterkies 23 stellen eine ideale Mischzone dar, in der die eingeleiteten Einzelflüssigkeiten nach Art eines Statikmischers zu einem homogenen Flüssigkeitsgemisch vermischt werden. Die bei diesem Mischvorgang entstehende Mischwärme wird im Wandbereich des unteren Totvolumens 31 an die Behälterwand des Harzbehälters 2 abgegeben. Durch die alternierende Zufuhr von frischem Wasser wird das in der Mischzone entstehende Flüssigkeitsgemisch der Regeneriermittelflüssigkeit zusätzlich gekühlt.

Der alternierende Wechsel zwischen Säurezufuhr und Wasserzufuhr erfolgt vorzugsweise in kurzen Zeitintervallen von weniger als 10 Sekunden Dauer. Um die Dosiergenauigkeit zu erhöhen, ist es auch günstig, wenn die Druckluft-Membranpumpe 1 durch Ansteuerung des entsprechenden Druckluftventiles 18 oder 19 mit langsamer Hubgeschwindigkeit läuft.

Der oben geschilderte Regenerationsvorgang mit verdünnter Säure als Regeneriermittellösung wird angewendet, wenn das Ionenaustauscherharz 25 ein Kationenaustauscher ist. Im Falle eines Anionenaustauscherharzes wird statt Säure aus dem Säurebehälter 5 konzentrierte Lauge aus dem Laugenbehälter 6 über das Absperrventil 16 zusammen mit Wasser als Regeneriermittelflüssigkeit in den Harzbehälter 2 eingeleitet.

Falls das Ionenaustauscherharz 25 ein Selektivaustauscher ist, erfolgt in einem ersten Schritt die Regenerierung mit verdünnter Säure und in einem nachfolgenden Betriebsschritt eine Konditionierung mit verdünnter Lauge. Auch hier wird jeweils eine Vermischung der zugeführten Flüssigkeiten in der Mischzone im unteren Teil des Harzbehälters 2 durch alternierendes Zuführen von Wasser und der jeweiligen konzentrierten Flüssigkeit bewirkt.

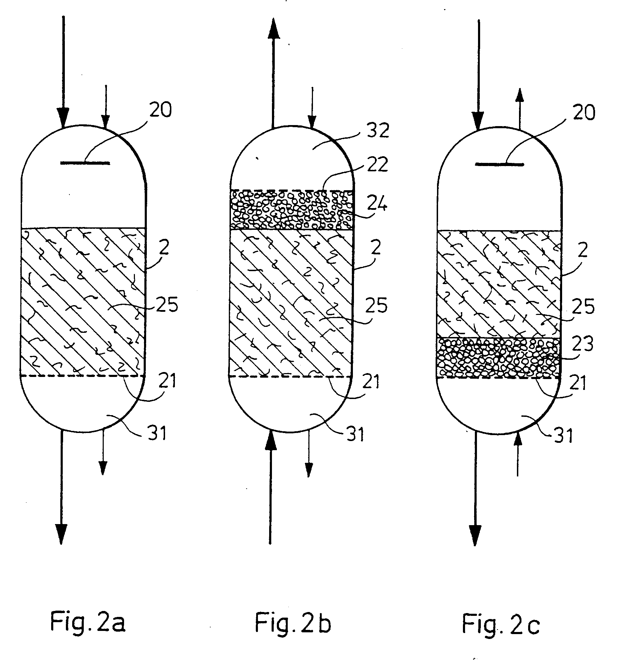

Die Ionenaustauscheranlage kann, wie in Fig. 2 gezeigt, mit unterschiedlichen Strömungsrichtungen in den verschiedenen Betriebsphasen betrieben werden. Dabei deuten die großen Pfeile jeweils die Strömungsrichtung der zu behandelnden Flüssigkeit und die kleinen Pfeile die Strömungsrichtung der Regeneriermittelflüssigkeit an.

In Fig. 2a ist das Abstrom-Gleichstrom-Verfahren gezeigt, bei dem sowohl die zu behandelnde Flüssigkeit als auch die Regeneriermittelflüssigkeit von oben nach unten den Harzbehälter 2 durchströmen. Ein oberer Düsenboden 22 ist in diesem Fall nicht notwendig, da das Ionenaustauscherharz 25 im Abstrom-Gleichstrom-Verfahren von den zuströmenden Flüssigkeiten immer nach unten auf den unteren Düsenboden 21 gedrückt wird. Hingegen empfiehlt sich das Vorsehen eines Prallschutzes 20, damit das Harzbett nicht von der eingeleiteten Flüssigkeit direkt getroffen und durchmischt wird.

Fig. 2b zeigt eine nach dem Aufstrom-Gegenstrom-Verfahren betriebene Ionenaustauscheranlage. Die zu behandelnde Flüssigkeit wird hierbei von unten nach oben durch Harzbehälter 2 geleitet, während die Regeneriermittelflüssigkeit von oben nach unten geleitet wird. Um eine effektive Mischzone für die Vermischung und Homogenisierung der Regeneriermittelflüssigkeit zu erhalten, die wie oben beschrieben durch alternierende Einleitung von konzentrierter Säure oder Lauge und Wasser erzeugt wird, ist bei dieser Ausführungsform oberhalb des Ionenaustauscherharzes 25 und unterhalb des oberen Düsenbodens 22 eine Deckschicht aus Inertmaterial 24 in Form von kleinen Partikeln mit geringerem spezifischen Gewicht als dem der Harzteilchen vorgesehen. Beim Einleiten der Einzelflüssigkeiten für die Regeneriermittelflüssigkeit geraten die leichten Inertmaterial-Partikel in Verwirbelung und vermischen somit die Einzelflüssigkeiten zu einem homogenen Flüssigkeitsgemisch.

In Fig. 2c) schließlich ist schematisch eine Ionenaustauscheranlage dargestellt, die wie die in Fig. 1 gezeigte im Abstrom-Gegenstrom-Verfahren betrieben wird. Hier ist wiederum auf dem unteren Düsenboden 21 eine Lage von grobkörnigem Filterkies 23 vorgesehen, die zusammen mit dem Totvolumen 31 und dem unteren Düsenboden 21 eine Mischzone für die Homogenisierung der von unten nach oben eingeleiteten Regeneriermittelflüssigkeit bildet.

Statt der in Fig. 2 gezeigten Düsenböden 21, 22 können auch die im Handel erhältlichen Düsensterne verwendet werden, die aus sternförmig radial von einer Zufuhrleitung abgehenden, geschlitzten Rohren bestehen. Das untere Totvolumen 31 wird dann bis zur Oberseite des unteren Düsensterns im Falle einer Abstrom-Gegenstrom-Anlage mit Filterkies gefüllt.

Sowohl bei nach dem Abstrom-Gleichstrom-Verfahren betriebenen Ionenaustauscheranlagen (siehe Fig. 2a) als auch bei Ionenaustauscheranlagen, die nach dem Abstrom-Gegenstrom-Verfahren betrieben werden (Fig. 2c) kann vor dem Regenerierungsschritt der Harzbehälter von unten nach oben mit frischem Wasser rückgespült werden. Beim Rückspülen sind die Absperrventile 10, 13 und 14 geöffnet und die übrigen Absperrventile 11, 12, 15 und 16 geschlossen. Die Rückspülung erfolgt mit frischem Wasser im Aufstrom mit hoher Strömungsgeschwindigkeit, wodurch erreicht wird, daß Schmutzpartikel, die einen kleineren Durchmesser als die Harzteilchen besitzen, nach oben aus dem Harzbehälter ausgeschwemmt werden und durch den Elnat-Ablauf 27 abfließen. Allerdings wird durch das kräftige Rückspülen auch das Harzbett verwirbelt und durchmischt.

Der Ausschwemmeffekt von kleinen Schmutzpartikeln kann im Falle des Abstrom-Gegenstrom-Verfahrens jedoch auch dadurch erzielt werden, daß die Regenerierung des Ionenaustauscherharzes 25 mit sehr geringer Strömungsgeschwindigkeit erfolgt, so daß die Schmutzpartikel durch die Regeneriermittelflüssigkeit nach oben getragen und aus dem Harzbehälter 2 entfernt werden. Dadurch bleibt die Schichtung des Harzbettes erhalten.

Bei einer Ionenaustauscheranlage, die nach dem Aufstrom-Gegenstrom-Prinzip betrieben wird, ist hingegen weder ein Rückspülschritt noch eine andere Art der Entfernung von Schmutzpartikel aus dem Ionenaustauscherharz 25 im Harzbehälter 2 möglich.

## Patentansprüche

1. Regenerierbare Ionenaustauscheranlage mit einem Harzbehälter (2), der zumindest teilweise mit Ionenaustauscherharz (25) in Form von kleinen Harzteilchen gefüllt ist und an seiner Oberseite und seiner Unterseite mindestens jeweils eine in eine Einlaß- bzw. Auslaßöffnung mündende Flüssigkeitsleitung für die Zuführung bzw. Ableitung von Flüssigkeiten in und aus dem Harzbehälter (2) aufweist, mit einem Wasserzulauf und einem Säure- und/oder Laugenzulauf zum Harzbehälter (2), wobei die Zuläufe jeweils Rohrleitungen mit Absperrventilen aufweisen, sowie mit einer Pumpe zur Förderung der Flüssigkeiten,
dadurch gekennzeichnet,
daß die Rohrleitungen der Zuläufe von Frischwasser, Säure und/oder Lauge in eine gemeinsame Zulaufleitung (3) zur Pumpe münden, wobei jeder Zulauf durch ein ansteuerbares Absperrventil (14, 15, 16) gesondert von der Zulaufleitung (3) zur Pumpe abgekoppelt werden kann, daß die Pumpe direkt entweder in eine der in die Ober- oder Unterseite des Harzbehälters (2) mündenden Flüssigkeitsleitungen fördert, daß die Pumpe eine Druckluft-Membranpumpe (1) ist und eine Zähleinrichtung (8) zur Hubzählung aufweist, und daß eine mit der Zähleinrichtung (8) verbundene Steuereinrichtung (9) zur Steuerung der Volumenströme von Wasser aus dem Wasserzulauf und Säure oder Lauge aus dem Säure- oder Laugenzulauf über die ansteuerbaren Absperrventile (14, 15, 16) aufgrund der jeweiligen Hubzahl der Druckluft-Membranpumpe (1) vorgesehen ist.

2. Ionenaustauscheranlage nach Anspruch 1, dadurch gekennzeichnet, daß im Harzbehälter (2) im Bereich der Unter- und/oder Oberseite zwischen der Einlaßöffnung der Flüssigkeitsleitungen zur Zuführung von Säure und/oder Lauge in den Harzbehälter (2) und dem Ionenaustauscherharz (25) eine Mischzone zur Vermischung und Homogenisierung der zugeführten Flüssigkeit vorgesehen ist.

3. Ionenaustauscheranlage nach Anspruch 2, dadurch gekennzeichnet, daß die Ionenaustauscheranlage im Abstrom-Gegenstrom betreibbar ist.

4. Ionenaustauscheranlage nach Anspruch 2, dadurch gekennzeichnet, daß die Ionenaustauscheranlage im Abstrom-Gleichstrom betreibbar ist.

5. Ionenaustauscheranlage nach Anspruch 3 oder 4, dadurch gekennzeichnet, daß im Harzbehälter (2) im Bereich der Oberseite ein Prallteller (20) und im Bereich der Unterseite ein unterer Düsenboden (21) vorgesehen ist, wobei das Ionenaustauscherharz (25) im Volumenbereich zwischen dem Prallteller (20) und dem unteren Düsenboden (21) angeordnet ist und zwischen dem unteren Düsenboden (21) und der Unterseite des Harzbehälters (2) ein unteres Totvolumen (31) bleibt.

6. Ionenaustauscheranlage nach Anspruch 3 und 5, dadurch gekennzeichnet, daß die Mischzone aus dem unteren Totvolumen (31), dem unteren Düsenboden (21) sowie einer darauf angeordneten Lage von vorzugsweise grobkörnigem Filterkies (23), insbesondere mit einem Partikeldurchmesser zwischen 2 mm und 5 mm aufgebaut ist.

7. Ionenaustauscheranlage nach Anspruch 3, dadurch gekennzeichnet, daß die Mischzone aus einem im Bereich der Unterseite im Harzbehälter (2) vorgesehenen Düsenstern sowie einer vom Boden des Harzbehälters (2) bis zur Oberseite des Düsensterns angeordneten Schicht von vorzugsweise grobkörnigem Filterkies (23) aufgebaut ist.

8. Ionenaustauscheranlage nach Anspruch 2, dadurch gekennzeichnet, daß die Ionenaustauscheranlage im Aufstrom-Gegenstrom betreibbar ist.

9. Ionenaustauscheranlage nach Anspruch 8, dadurch gekennzeichnet, daß im Harzbehälter (2) im Bereich der Oberseite ein oberer Düsenboden (22) und im Bereich der Unterseite ein unterer Düsenboden (21) vorgesehen ist, wobei das Ionenaustauscherharz (25) im Volumenbereich zwischen dem unteren und dem oberen Düsenboden (21, 22) angeordnet ist und zwischen dem oberen Düsenboden (22) und der Oberseite des Harzbehälters (2) ein oberes Totvolumen (32) und zwischen dem unteren Düsenboden (21) und der Unterseite des Harzbehälters (2) ein unteres Totvolumen (31) bleibt.

10. Ionenaustauscheranlage nach Anspruch 9, dadurch gekennzeichnet, daß die Mischzone aus dem oberen Düsenboden (22) sowie einer zwischen dem oberen Düsenboden (22) und dem Ionenaustauscherharz (25) angeordneten Deckschicht aus Inertmaterial (24) in Form von kleinen Partikeln mit einem geringeren spezifischen Gewicht als dem der Harzteilchen aufgebaut ist.

11. Ionenaustauscheranlage nach einem der vorhergehenden Ansprüche, dadurch gekennzeichnet, daß mindestens zwei Druckluftleitungen mit Luft von unterschiedlichem Druck vorgesehen sind, und daß die Druckluft-Membranpumpe (1) alternativ mit Druckluft aus einer der Druckluftleitungen betrieben werden kann.

12. Ionenaustauscheranlage nach Anspruch 11, dadurch gekennzeichnet, daß in jeder der Druckluftleitungen ein Druckluftventil (18, 19) vorgesehen ist, und daß die Druckluftleitungen nach den Druckluftventilen (18, 19) und vor der Druckluft-Membranpumpe (1) in eine gemeinsame Luftzufuhrleitung zur Druckluft-Membranpumpe (1) münden.

13. Ionenaustauscheranlage nach Anspruch 12, dadurch gekennzeichnet, daß die Druckluftventile (18, 19) von der Steuereinrichtung (9) aufgrund der aktuellen Hubzahl der Druckluft-Membranpumpe (1) ansteuerbar sind.

14. Ionenaustauscheranlage nach einem der vorhergehenden Ansprüche, dadurch gekennzeichnet, daß die Zähleinrichtung (8) zur Hubzählung ein vorzugsweise elektrisches Zählwerk mit mindestens vier, vorzugsweise mindestens acht abspeicherbaren, diskreten Hubwerten umfaßt.

15. Verfahren zum Betrieb einer Ionenaustauscheranlage nach einem der vorhergehenden Ansprüche, dadurch gekennzeichnet, daß beim Regenerieren des Ionenaustauscherharzes (25) mehrfach alternierend Wasser und konzentrierte Säure oder Lauge in den Harzbehälter (2) gefördert wird, wobei die Volumina der zugeführten Flüssigkeiten über die Hubzahl der Druckluft-Membranpumpe (1) dosiert werden und wobei eine Verdünnung der zugeführten Säure oder Lauge auf eine Anwendungskonzentration zum Regenerieren erst im Harzbehälter (2) durch Vermischung mit dem alternierend zugeführten Wasser erfolgt.

16. Verfahren zum Betrieb einer Ionenaustauscheranlage nach den Ansprüchen 2 und 15, dadurch gekennzeichnet, daß die Vermischung von Säure oder Lauge mit Wasser im wesentlichen in der Mischzone stattfindet, bevor die aus Säure oder Lauge und Wasser gebildete Regenerierflüssigkeit das Ionenaustauscherharz (25) erreicht.

17. Verfahren nach Anspruch 15 oder 16, dadurch gekennzeichnet, daß die mehrfach alternierende Zufuhr von Wasser und Säure oder Lauge in den Harzbehälter (2) in schnellem zeitlichen Wechsel, vorzugsweise in Zeitintervallen von weniger als 10 s erfolgt.

18. Verfahren nach einem der Ansprüche 15 bis 17, dadurch gekennzeichnet, daß die zugeführten Flüssigkeiten mit unterschiedlichen Geschwindigkeiten aufgrund von unterschiedlichen Hubzahlen pro Zeiteinheit der Druckluft-Membranpumpe (1) gefördert werden, insbesondere, daß die konzentrierte Säure oder Lauge mit geringerer, das Wasser hingegen mit höherer Geschwindigkeit gefördert wird.

19. Verfahren nach einem der Ansprüche 15 bis 18, dadurch gekennzeichnet, daß die Ionenaustauscheranlage im Abstrom-Gleichstrom-Verfahren betrieben wird.

20. Verfahren nach einem der Ansprüche 15 bis 18, dadurch gekennzeichnet, daß die Ionenaustauscheranlage im Aufstrom-Gegenstrom-Verfahren betrieben wird.

21. Verfahren nach einem der Ansprüche 15 bis 18, dadurch gekennzeichnet, daß die Ionenaustauscheranlage im Abstrom-Gegenstrom-Verfahren betrieben wird.

22. Verfahren nach Anspruch 21, dadurch gekennzeichnet, daß vor einer Regenerierung des Ionenaustauscherharzes (25) eine Rückspülung des Harzbehälters (2) mit frischem Wasser im Aufstrom, vorzugsweise mit hoher Strömungsgeschwindigkeit, insbesondere > 20 m/h, erfolgt.

23. Verfahren nach Anspruch 21 oder 22, dadurch gekennzeichnet, daß die Regenerierung des Ionenaustauscherharzes (25) mit geringer Strömungsgeschwindigkeit, insbesondere < 5 m/h, erfolgt.
